# FASCICULE DE BREVET EUROPEEN

(11) **EP 3 964 719 B1**
(45) Date de publication et mention de la délivrance du brevet: **05.11.2025**
(21) Numéro de dépôt: 21192563.1
(22) Date de dépôt: 23.08.2021
(51) Int. Cl.: F15B 11/13, A01B 63/111, A01D 34/24

(54) **CIRCUIT HYDRAULIQUE POUR MACHINE AGRICOLE ET MACHINE AGRICOLE ASSOCIÉE**
HYDRAULIKKREISLAUF FÜR LANDWIRTSCHAFTLICHE MASCHINE UND ENTSPRECHENDE LANDWIRTSCHAFTLICHE MASCHINE
HYDRAULIC CIRCUIT FOR AN AGRICULTURAL MACHINE AND ASSOCIATED AGRICULTURAL MACHINE

(30) Priorité: 28.08.2020 FR 2008765
(43) Date de publication de la demande: 09.03.2022
(73) Titulaire: Kuhn SAS, 67700 Saverne (FR)
(72) Inventeur: SCHMITT, Thomas, 57410 RAHLING (FR); REINHARDT, Michel, 67340 BISCHHOLTZ (FR)
(74) Mandataire: Ipsilon

(56) Documents cités:
- EP-A1- 1 146 233
- EP-A1- 3 404 272
- EP-B1- 1 648 216
- FR-A1- 2 547 222
- US-A- 3 415 161

## Description

La présente invention concerne le domaine du machinisme agricole et plus particulièrement une machine agricole à laquelle est associé un circuit hydraulique.

Dans le domaine du machinisme agricole, il est courant qu'un réglage de position d'un sous-ensemble ou élément de machine soit géré par un ou plusieurs vérin(s) hydraulique(s).

A titre d'exemple, pour une herse rotative repliable, le réglage de la profondeur de travail des outils est géré par des vérins hydrauliques.

Afin de maintenir le gabarit routier de la herse en position de transport (régi par les diverses réglementations françaises, européennes, etc.), il peut être nécessaire de rentrer complétement ces vérins hydrauliques de réglage pour gagner en encombrement global. Le réglage de la profondeur de travail fait sur la parcelle avant de replier la machine est ainsi perdu.

La manœuvre de réglage de profondeur devra être réitérée sur la parcelle suivante, ou après le prochain dépliage de la machine pour pouvoir retrouver le réglage précédent.

La publication DE102004025522B4 divulgue déjà un circuit hydraulique utilisant un système de vérins maître-esclave, avec une chambre mémoire intégrée au vérin maître, lequel dispose ainsi de trois chambres qui permet de mémoriser un réglage. Toutefois, cette configuration est problématique dans le cas où il est nécessaire de faire rentrer la tige en entier lors du pliage ou du dépliage. Dans ce cas, la fonction de mémorisation n'est plus opérante.

La publication EP1648216A2 divulgue une faucheuse comprenant en particulier un dispositif de manœuvre. Le dispositif de manœuvre permet de passer d'une position de travail à une position de manœuvre et inversement. Ce dispositif de manœuvre est constitué d'un cylindre dont l'intérieur est divisé en deux chambres par un piston flottant. Une première chambre desdites chambres est reliée au vérin hydraulique du dispositif d'allégement au moyen d'une deuxième conduite et l'autre chambre est reliée à un circuit hydraulique dudit véhicule moteur au moyen d'une troisième conduite de manière à pouvoir injecter à partir de ladite première chambre une quantité d'huile supplémentaire dans le vérin hydraulique du dispositif d'allégement pour amener le mécanisme de coupe de la position de travail dans la position de manœuvre, et à pouvoir extraire la même quantité d'huile dudit vérin hydraulique pour amener ledit mécanisme de coupe de la position de manœuvre dans la position de travail. Le but principal de la solution présentée dans ce document est la gestion de l'allègement, c'est-à-dire de la pression au sol de la machine, entre deux modes d'utilisation de la machine. L'objectif est ainsi de conserver et de pouvoir retrouver un réglage de pression au sol, tout en utilisant un accumulateur hydropneumatique pour compenser les variations du sol.

La publication US3415161A divulgue un circuit hydraulique permettant de limiter la course d'un vérin via un composant intermédiaire. Toutefois, ce circuit hydraulique ne permet pas de mémoriser n'importe quelle position du vérin.

La présente invention a pour but de pallier au moins l'un de ces inconvénients et plus particulièrement de proposer une solution permettant de mémoriser facilement, rapidement et précisément une position à mémoriser d'un vérin hydraulique d'un circuit hydraulique pour machine agricole pour retrouver facilement ultérieurement cette position à mémoriser et ainsi minimiser les pertes de temps dues à la répétition des manœuvres de réglages et cela quelle que soit la modification de la position du vérin hydraulique à effectuer après mémorisation.

A cet effet, l'invention concerne une machine agricole selon la revendication 1.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] représente un circuit hydraulique,
[Fig. 2] représente un circuit hydraulique selon l'invention dans une première variante de réalisation,
[Fig. 3] représente un circuit hydraulique selon l'invention dans une deuxième variante de réalisation, et
[Fig. 4] représente un circuit hydraulique selon l'invention dans une troisième variante de réalisation.

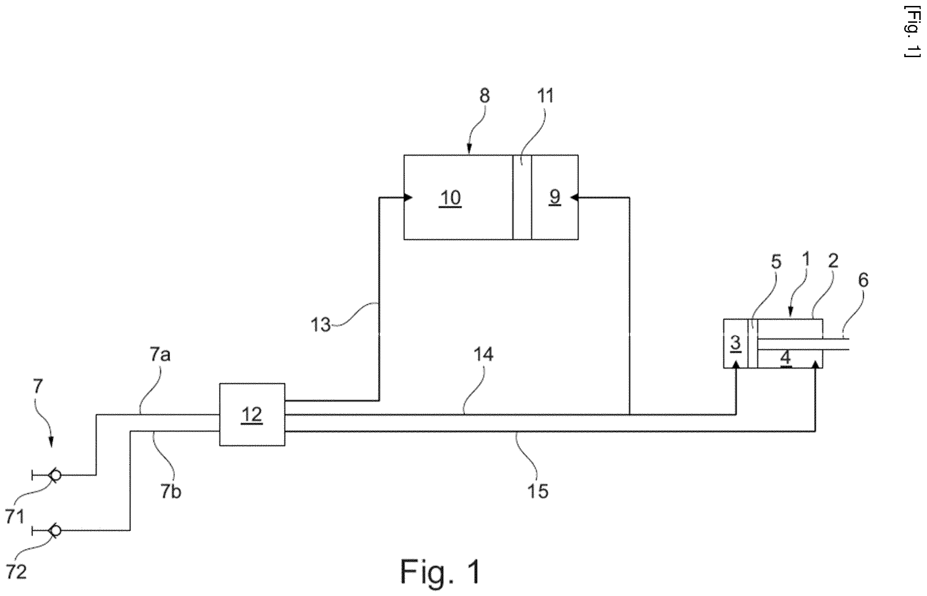

En référence aux figures 1 à 4, le circuit hydraulique de la machine agricole, laquelle comprend au moins un élément de machine (non représenté) qui est apte et destiné à être actionné par au moins un vérin hydraulique principal 1, comprend au moins :
- un circuit hydraulique principal comprenant au moins
   - ledit au moins un vérin hydraulique principal 1 comportant au moins un cylindre 2 comprenant une première chambre 3 et une deuxième chambre 4, lesquelles sont séparées l'une de l'autre par un piston 5, et comportant un organe d'actionnement 6 lequel est relié mécaniquement au piston 5 et est apte et destiné à être relié mécaniquement audit au moins un élément de machine, ledit piston 5 étant mobile entre successivement une position initiale P1 à mémoriser pour laquelle la première chambre 3 ou la deuxième chambre 4 est apte et destinée à contenir un volume d'huile à mémoriser V1, une position intermédiaire P2 pour laquelle la première chambre 3 est apte et destinée à contenir un volume d'huile quelconque V2 et différent du volume d'huile à mémoriser V1 et une position finale P3 pour laquelle la première chambre 3 est apte et destinée à contenir un volume d'huile mémorisé V3 égal ou sensiblement égal audit volume d'huile à mémoriser V1,
   - une unité de pilotage/distribution principale 7 reliée hydrauliquement au moins à l'une des première et deuxième chambres 3, 4 dudit vérin hydraulique principal 1 par des moyens de conduction hydraulique et étant agencée pour actionner ledit vérin hydraulique principal 1 au moins entre la position initiale P1 à mémoriser et la position intermédiaire P2,
- un circuit hydraulique mémoire relié hydrauliquement audit circuit hydraulique principal comprenant au moins :
   - un cylindre de stockage 8 hydraulique comprenant au moins une première chambre de stockage 9 et une deuxième chambre de stockage 10, lesquelles sont séparées l'une de l'autre par un piston 11 mobile,
   - une unité de pilotage/distribution mémoire 12 reliée hydrauliquement, à la deuxième chambre de stockage 10 dudit cylindre de stockage 8 par des moyens de conduction hydraulique 13.

Dans ledit circuit hydraulique ledit cylindre de stockage 8 hydraulique est une entité distincte du cylindre 2 dudit vérin hydraulique principal 1, et la première chambre de stockage 9 dudit cylindre de stockage 8 hydraulique est reliée hydrauliquement à ladite première chambre 3 dudit vérin hydraulique principal 1 au moins par des moyens de conduction hydraulique 14, 14a, 14b, de sorte que ledit volume d'huile à mémoriser V1 contenu dans la première chambre 3 ou la deuxième chambre 4 correspondant à la position initiale P1 du piston 5 soit transféré dans la première chambre de stockage 9 dudit cylindre de stockage 8 hydraulique pour mémoriser la position initiale P1 lors du déplacement dudit piston 5 de la position initiale P1 vers la position intermédiaire P2 dudit piston 5.

Cette configuration avantageuse permet de pouvoir retrouver aisément et rapidement le réglage de la position dudit au moins un vérin hydraulique principal 1 dans le cas où celui-ci doit être actionné, quelle qu'en soit la raison, dans le but de retrouver un réglage de position d'un élément de machine de préférence un outil. N'importe quelle position individuelle située dans la plage de réglage de position peut donc être mémorisée par l'intermédiaire de la position initiale P1 et du volume d'huile à mémoriser V1 pour être retrouvée par la suite via la position finale P3 et le volume d'huile mémorisé V3. Le volume d'huile à mémoriser V1 peut être une valeur variable. Pour ce faire un cylindre de stockage 8 hydraulique qui est déporté par rapport au vérin hydraulique principal 1 est configuré de sorte à réaliser une mémoire. Le volume d'huile à mémoriser V1 contenu dans la première chambre 3 ou la deuxième chambre 4 correspondant au réglage effectué est transféré à la première chambre de stockage 9 de ce cylindre de stockage 8, lorsque le vérin hydraulique principal 1 est contraint de passer dans une autre position, par exemple suite à une obligation de faire rentrer/sortir le vérin hydraulique principal 1 partiellement ou complètement. Le cylindre de stockage 8 permet de recevoir puis transférer ultérieurement le volume d'huile correspondant au réglage du vérin à chaque passage dans une autre position. Le principe de la conservation du volume est utilisé dans la présente invention. L'usage du vérin hydraulique principale 1 et du cylindre de stockage de type hydrauliques est essentiel pour utiliser le principe de conservation du volume d'huile. Le transfert est effectué à volume constant

Les moyens de conduction hydraulique 14, 14a, 14b sont prévus pour relier hydrauliquement la première chambre de stockage 9 dudit cylindre de stockage 8 à ladite première chambre 3 dudit vérin hydraulique principal 1 dans le but de transférer le volume d'huile à mémoriser V1 contenu alternativement dans la première chambre 3 ou dans la première chambre de stockage 9.

La première chambre de stockage 9 dudit cylindre de stockage 8 et ladite première chambre 3 dudit vérin hydraulique principal 1 peuvent être reliées hydrauliquement directement ou indirectement. Selon l'invention, la première chambre de stockage 9 dudit cylindre de stockage 8 et ladite première chambre 3 dudit vérin hydraulique principal 1 sont reliées hydrauliquement indirectement.

Selon la figure 1, la première chambre de stockage 9 dudit cylindre de stockage 8 et ladite première chambre 3 dudit vérin hydraulique principal 1 sont reliées hydrauliquement directement par des moyens de conduction hydraulique 14 comprenant une ou des conduites hydrauliques.

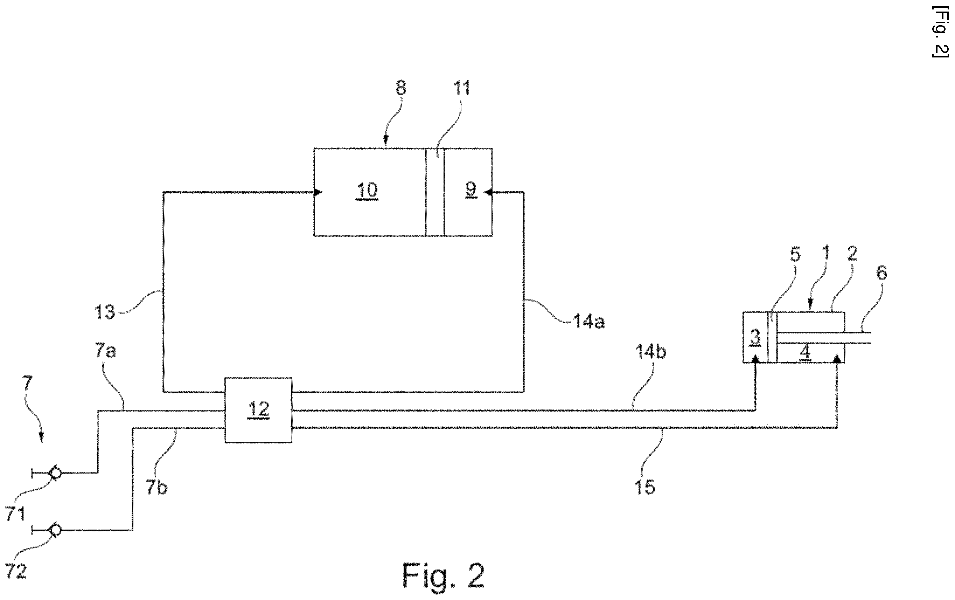

Conformément à l'invention et selon les figures 2, 3 et 4 qui illustrent respectivement une première variante, une deuxième variante et une troisième variante de réalisation selon l'invention, la première chambre de stockage 9 dudit cylindre de stockage 8 et ladite première chambre 3 dudit vérin hydraulique principal 1 sont reliées hydrauliquement indirectement par des moyens de conduction hydraulique 14a, 14b comprenant une ou des conduites hydrauliques 14a, 14b et par l'unité de pilotage/distribution mémoire 12.

Les moyens de conduction hydraulique 14, 14a, 14b peuvent comprendre une ou des conduites hydrauliques et/ou des conduites se divisant en deux.

De préférence, ladite première chambre de stockage 9 dudit cylindre de stockage 8 est reliée hydrauliquement indirectement à ladite première chambre 3 dudit vérin hydraulique principal 1 lesdits moyens de conduction hydraulique 14, 14a, 14b comprenant des conduites hydrauliques 14a, 14b et par l'unité de pilotage/distribution mémoire 12 de sorte que ledit volume d'huile à mémoriser V1 contenu dans la première chambre de stockage 9 dudit cylindre de stockage 8 soit transféré dans la première chambre 3 ou la deuxième chambre 4 dudit vérin hydraulique principal 1 pour actionner le piston 5 du vérin hydraulique principal 1 de la position intermédiaire P2 vers la position finale P3 du piston 5 dudit vérin hydraulique principal 1 correspondant à ladite position initiale P1.

Avantageusement, lorsque la machine agricole se trouve à nouveau dans une position où il faut retrouver le réglage précédent, alors le volume contenu dans la première chambre de stockage 9 du cylindre de stockage 8 et qui correspond au réglage précèdent est transféré à nouveau au vérin hydraulique principal 1. Grâce au principe de la conservation des volumes dans un circuit hydraulique, la position précédente du vérin hydraulique principal 1 peut-être retrouvée de manière exacte. Le réglage que l'on retrouve est exactement le même que l'ancien, ce qui permet de garantir la précision et la régularité des positions du vérin hydraulique principal 1 dans le temps. Aucun réglage "hasardeux" n'est fait à la main et qui diffèrent à chaque parcelle.

De préférence, l'unité de pilotage principale 7 est agencée pour actionner le piston 5 du vérin hydraulique principal 1 de la position initiale P1 à mémoriser vers la position intermédiaire P2 dudit piston 5, de sorte que ledit volume d'huile à mémoriser V1 contenu dans la première chambre 3 soit transféré dans la première chambre de stockage 9 dudit cylindre de stockage 8 pour mémoriser la position initiale P1 lors du déplacement dudit piston 5 de la position initiale P1 vers la position intermédiaire P2 dudit piston 5.

Dans cette configuration avantageuse, lorsqu'un utilisateur actionne l'unité de pilotage principale 7, le vérin hydraulique principal 1 passe de la position initiale P1 vers la position intermédiaire P2 et le volume d'huile à mémoriser V1 contenu dans la première chambre 3 ou la deuxième chambre 4 est transféré dans la première chambre de stockage 9 dudit cylindre de stockage 8.

De préférence, l'unité de pilotage/distribution mémoire 12 est agencée pour actionner le piston 11 du cylindre de stockage 8, de sorte que ledit volume d'huile à mémoriser V1 contenu dans la première chambre de stockage 9 dudit cylindre de stockage 8 soit transféré dans la première chambre 3 ou la deuxième chambre 4 dudit vérin hydraulique principal 1, pour déplacer le piston 5 du vérin hydraulique principal 1 de la position intermédiaire P2 vers la position finale P3 du piston 5 dudit vérin hydraulique principal 1.

Dans cette configuration avantageuse, lorsqu'un utilisateur actionne l'unité de pilotage/distribution mémoire 12, le vérin hydraulique principal 1 passe de la position intermédiaire P2 vers la position finale P3 et le volume d'huile à mémoriser V1 contenu dans la première chambre de stockage 9 du cylindre de stockage 8 est transféré dans la première chambre 3 ou la deuxième chambre 4 dudit vérin hydraulique principal 1. La position finale P3 correspond alors avantageusement à la position initiale P1.

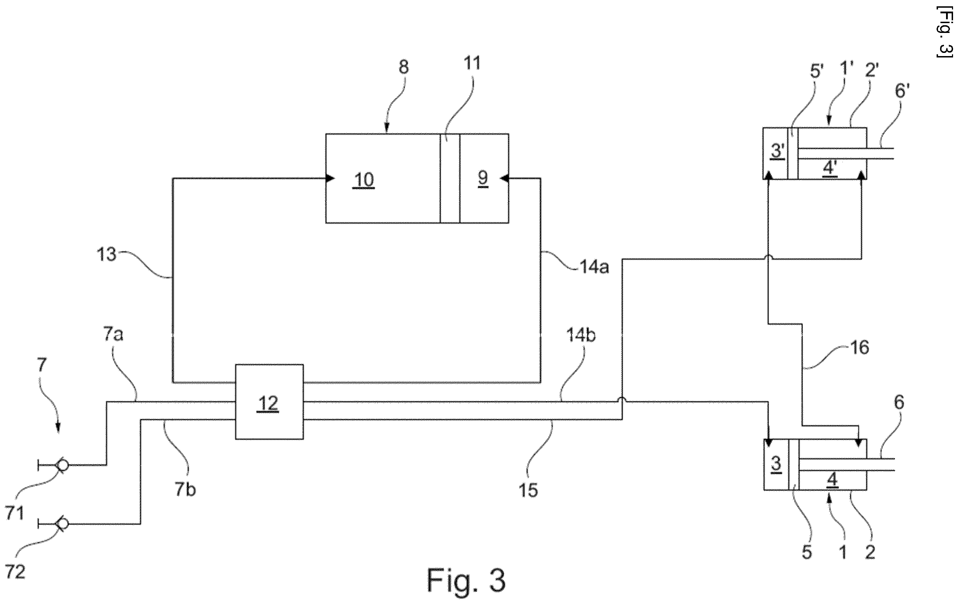

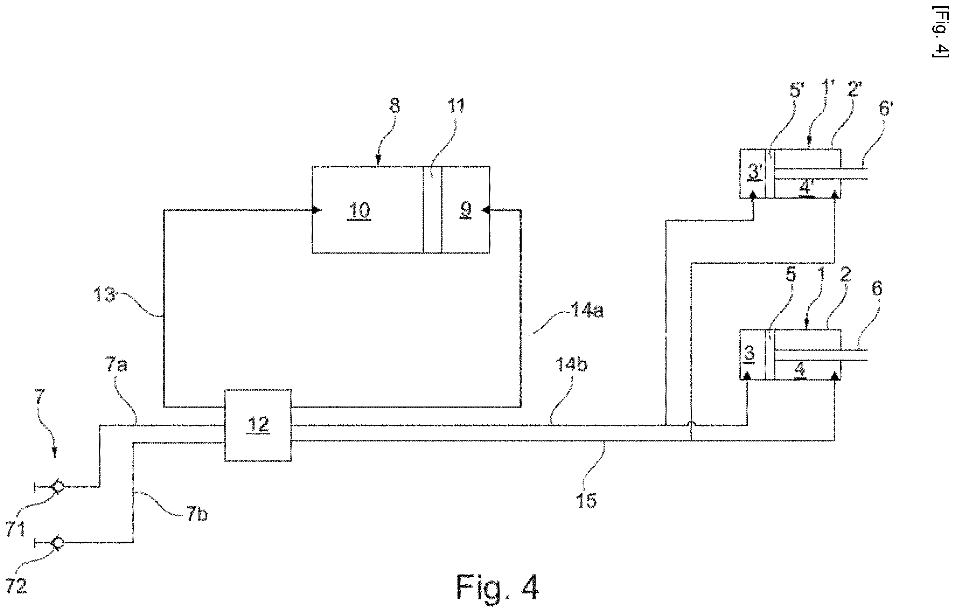

De préférence et comme l'illustrent les figures 3 et 4, le circuit hydraulique principal comprend une pluralité de vérins hydrauliques

Dans ce cas, un diviseur de débit permettant d'alimenter la pluralité de vérins hydrauliques peut également être prévu.

Par exemple et comme l'illustre la figure 3, le circuit hydraulique peut comprendre un vérin hydraulique principal 1 maître et un vérin hydraulique secondaire 1' esclave.

Dans ce cas, le vérin hydraulique secondaire 1' esclave peut comporter au moins un cylindre secondaire 2' comprenant une première chambre secondaire 3' et une deuxième chambre secondaire 4', lesquelles sont séparées l'une de l'autre par un piston secondaire 5', et comportant un organe d'actionnement secondaire 6' lequel est relié mécaniquement au piston secondaire 5' et est apte et destiné à être relié mécaniquement à au moins un élément de machine.

Selon une première possibilité illustrée à la figure 3, la première chambre secondaire 3' du vérin hydraulique secondaire 1' esclave est reliée hydrauliquement à la deuxième chambre hydraulique 4 du vérin hydraulique principal 1 par une ou des conduites hydrauliques 16. La deuxième chambre secondaire 4' est reliée hydrauliquement à l'unité de pilotage/distribution mémoire 12 par une ou des conduites hydrauliques 15 et à l'unité de pilotage principale 7 par une ou des conduites hydrauliques 7a.

Il en résulte que lorsque le vérin hydraulique principal 1 est déplacé en position, le vérin hydraulique secondaire 1' esclave peut être également déplacé selon cette même position. Ainsi, un seul cylindre de stockage 8 est nécessaire pour mémoriser la position initial P1 du vérin hydraulique principal 1 maître et du vérin hydraulique secondaire 1' esclave.

Selon une deuxième possibilité illustrée à la figure 4, la première chambre secondaire 3' du vérin hydraulique secondaire 1' est reliée hydrauliquement à l'unité de pilotage/distribution mémoire 12 par une ou des conduites hydrauliques 14b et à l'unité de pilotage principale 7 par une ou des conduites hydrauliques 7a. La deuxième chambre secondaire 4' du vérin hydraulique secondaire 1' est reliée hydrauliquement à l'unité de pilotage/distribution mémoire 12 par une ou des conduites hydrauliques 15 et à l'unité de pilotage principale 7 par une ou des conduites hydrauliques 7b.

Il en résulte que lorsque le vérin hydraulique principal 1 est déplacé en position, le vérin hydraulique secondaire 1' peut être également déplacé selon cette même position. Ainsi, un seul cylindre de stockage 8 est nécessaire pour mémoriser la position initial P1 du vérin hydraulique principal 1 et du vérin hydraulique secondaire 1'.

La figure 1 illustre un exemple dans lequel le circuit hydraulique comprend un seul vérin hydraulique principal 1 et un seul cylindre de stockage 8 hydraulique. En outre, l'unité de pilotage principale 7 comprend deux clapets anti-retour pilotés 71 et 72 qui sont reliés hydrauliquement à l'unité de pilotage/distribution mémoire 12 par des conduites hydrauliques 7a et 7b parallèles. L'unité de pilotage/distribution mémoire 12 est par ailleurs reliée hydrauliquement à la deuxième chambre de stockage 10 dudit cylindre de stockage 8 et à la deuxième chambre 4 du vérin hydraulique principal respectivement par des conduites hydrauliques 13, 15. L'unité de pilotage/distribution mémoire 12 est reliée hydrauliquement à la première chambre de stockage 9 du cylindre de stockage 8 et à la première chambre 3 du vérin hydraulique principal 1 par respectivement une conduite hydraulique 14 se divisant en deux.

La figure 2 illustre la première variante de réalisation du circuit hydraulique selon l'invention dans laquelle le circuit hydraulique comprend un vérin hydraulique principal 1 et un seul cylindre de stockage 8 hydraulique. En outre, l'unité de pilotage principale 7 comprend deux clapets anti-retour pilotés 71 et 72 qui sont reliés hydrauliquement à l'unité de pilotage/distribution mémoire 12 par des conduites hydrauliques 7a et 7b parallèles. L'unité de pilotage/distribution mémoire 12 est par ailleurs reliée hydrauliquement aux première chambre de stockage 9 et deuxième chambre de stockage 10 dudit cylindre de stockage 8, ainsi qu'aux première chambre 3 et deuxième chambre 4 du vérin hydraulique principal 1 par respectivement des conduites hydrauliques 14a, 13, 14b, 15 parallèles.

Cette première variante de réalisation a pour avantage de centraliser toutes les circulations de fluides du cylindre de stockage 8 via l'unité de pilotage/distribution mémoire 12. Il s'agit d'une autre variante de réalisation possible de la solution représentée sur la figure 1.

La figure 3 illustre la deuxième variante de réalisation du circuit hydraulique selon l'invention dans laquelle le circuit hydraulique comprend un vérin hydraulique principal 1 maître, un vérin hydraulique secondaire 1' esclave décrit précédemment et un seul cylindre de stockage 8. En outre, l'unité de pilotage principale 7 comprend deux clapets anti-retour pilotés 71 et 72 qui sont reliés hydrauliquement à l'unité de pilotage/distribution mémoire 12 par des conduites hydrauliques 7a et 7b parallèles. L'unité de pilotage/distribution mémoire 12 est par ailleurs reliée hydrauliquement aux première chambre de stockage 9 et deuxième chambre de stockage 10 dudit cylindre de stockage 8, ainsi qu'à la première chambre 3 du vérin hydraulique principal 1 maître et à la deuxième chambre secondaire 4' vérin hydraulique secondaire 1' esclave par respectivement des conduites hydrauliques 14a, 13, 14b, 15 parallèles.

Dans cette configuration avantageuse, lorsqu'un utilisateur actionne l'unité de pilotage principale 7, le vérin hydraulique principal 1 et le vérin hydraulique secondaire 1' esclave passent de la position initiale P1 vers la position intermédiaire P2 et le volume d'huile à mémoriser V1 contenu dans la première chambre 3 est transféré dans la première chambre de stockage 9 dudit cylindre de stockage 8. Dans cette configuration avantageuse, lorsqu'un utilisateur actionne l'unité de pilotage/distribution mémoire 12, le vérin hydraulique principal 1 et le vérin hydraulique secondaire 1' esclave passent de la position intermédiaire P2 vers la position finale P3 et le volume d'huile à mémoriser V1 contenu dans la première chambre de stockage 9 du cylindre de stockage 8 est transféré dans la première chambre 3 dudit vérin hydraulique principal 1. La position finale P3 correspond alors avantageusement à la position initiale P1.

Cette configuration avantageuse permet de retrouver un réglage sur une pluralité d'éléments de machine tels que des outils quasi en même temps et ce d'une manière simple sans avoir à utiliser d'élément supplémentaire comme un diviseur de débit. Par exemple, dans le cas d'une machine agricole de préférence repliable comprenant une pluralité de sections présentant chacune un outil, il est possible de retrouver le réglage quasi en même temps sur cette pluralité d'outils.

La figure 4 illustre la troisième variante de réalisation du circuit hydraulique selon l'invention dans laquelle le circuit hydraulique comprend un vérin hydraulique principal 1, un vérin hydraulique secondaire 1' et un seul cylindre de stockage 8. En outre, l'unité de pilotage principale 7 comprend deux clapets anti-retour pilotés 71 et 72 qui sont reliés hydrauliquement à l'unité de pilotage/distribution mémoire 12 par des conduites hydrauliques 7a et 7b parallèles. L'unité de pilotage/distribution mémoire 12 est par ailleurs reliée hydrauliquement aux première chambre de stockage 9 et deuxième chambre de stockage 10 dudit cylindre de stockage 8 par des conduites hydrauliques 14a et 13, à la première chambre 3 du vérin hydraulique principal 1 et à la première chambre secondaire 3' du vérin hydraulique secondaire 1' par une conduite hydraulique 14b se divisant en deux, et enfin à la deuxième chambre 4 du vérin hydraulique principal 1 et à la deuxième chambre secondaire 4' du vérin hydraulique secondaire 1' par une conduite hydraulique 15 se divisant en deux. L'unité de pilotage/distribution mémoire 12 comprend préférentiellement un diviseur de débit.

Dans cette configuration avantageuse, lorsqu'un utilisateur actionne l'unité de pilotage principale 7, le vérin hydraulique principal 1 et le vérin hydraulique secondaire 1' passent de la position initiale P1 vers la position intermédiaire P2 et le volume d'huile à mémoriser V1 contenu dans la première chambre 3 et le volume d'huile à mémoriser V1' contenu dans la première chambre secondaire 3' sont transférés dans la première chambre de stockage 9 dudit cylindre de stockage 8. Dans cette configuration avantageuse, lorsqu'un utilisateur actionne l'unité de pilotage/distribution mémoire 12, le vérin hydraulique principal 1 et le vérin hydraulique secondaire 1' passent de la position intermédiaire P2 vers la position finale P3 et le volume d'huile à mémoriser V1+V1' contenu dans la première chambre de stockage 9 du cylindre de stockage 8 est transféré pour moitié dans la première chambre 3 dudit vérin hydraulique principal 1 et pour moitié dans la première chambre secondaire 3' du vérin hydraulique secondaire 1'. La position finale P3 correspond alors avantageusement à la position initiale P1.

L'avantage de la variante de réalisation illustrée à la figure 4 est qu'elle permet de retrouver un réglage simultanément sur une pluralité d'éléments de machine tels que des outils. Par exemple dans le cas d'une machine agricole de préférence repliable ayant une pluralité de sections présentant chacune un outil, il est possible de retrouver le réglage en même temps sur la pluralité d'outils et ce d'une manière rapide et sans décalage dans le temps. Tous les vérins seront repositionnés en même temps, ce qui garantit un gain de temps en comparaison à la variante de la figure 3 qui impose un léger décalage dans le temps dû au système maître-esclave.

L'unité de pilotage/distribution mémoire 12 peut être choisie parmi un distributeur hydraulique, une électrovanne, un clapet anti-retour double piloté ou un robinet à actionnement manuel.

De manière facultative, le piston 11 du cylindre de stockage 8 est relié à un organe de mesure de la position du piston 11 au sein du cylindre de stockage 8 (non représenté). Cet organe de mesure permet de mesurer la position du piston 11 au sein du cylindre de stockage 8. Cet organe de mesure peut se présenter sous la forme d'un capteur, par exemple de position, mesurant la position du piston 11 au sein du cylindre de stockage 8. L'information mesurée par cet organe, tel qu'un capteur, peut être utilisée dans la commande du système hydraulique ou à des fins de surveillance du bon fonctionnement du circuit hydraulique.

L'organe d'actionnement des vérins hydrauliques selon l'invention peut être une tige.

On notera que comme le transfert est effectué à volume constant, il en résulte qu'une purge/réinitialisation du cylindre de stockage 8 n'est pas nécessaire car la gestion du volume constant se fait grâce à une butée (non représentée) du cylindre de stockage 8.

Selon une variante possible faisant partie de l'invention et qui n'est pas illustrée, il peut être possible de mémoriser le volume de la deuxième chambre 4 du vérin hydraulique principal 1 à la place du volume de la troisième chambre 3. Dans ce cas-là, **il** suffit simplement d'inverser les moyens de conduction hydrauliques entre le cylindre de stockage 8 et le vérin hydraulique principal 1.

L'invention concerne une machine agricole (non représentée) comprenant l'au moins un élément de machine apte et destiné à être actionné par l'au moins un vérin hydraulique principal 1.

La machine agricole comprend le circuit hydraulique décrit précédemment.

Cette configuration avantageuse permet de retrouver un réglage de position sur au moins un vérin hydraulique principal 1 d'une machine agricole. Plus particulièrement il est possible de retrouver facilement le réglage dudit au moins un vérin hydraulique principal 1 après qu'il soit passé par une autre position. Il en résulte que la présente invention permet de gagner du temps puisque moins de manœuvres de réglages sont nécessaires et de conserver à chaque fois un réglage bien précis.

Préférentiellement, la machine agricole est choisie parmi une machine agricole de travail du sol ou une machine de récolte.

La machine agricole peut consister en une herse rotative, de préférence une herse rotative repliable.

L'élément de machine peut être un outil, par exemple un outil de travail du sol tel qu'un rouleau, une barre niveleuse ou une barre d'outils comprenant des éléments semeurs. L'élément de machine peut également être un outil de récolte tel qu'une barre de coupe, un conditionneur, un organe de groupage, un rotor de râtelage ou un dispositif de ramassage.

Ledit au moins un vérin hydraulique principal 1 peut être un vérin de réglage de la profondeur de travail de l'élément de machine.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention tel que défini par les revendications.

## Revendications

1. Machine agricole comprenant au moins un élément de
machine apte et destiné à être actionné par au moins un vérin hydraulique principal (1) et un circuit hydraulique,
ledit circuit hydraulique comprenant au moins :
- un circuit hydraulique principal comprenant au moins
• ledit au moins un vérin hydraulique principal (1) comportant au moins un cylindre (2) comprenant une première chambre (3) et une deuxième chambre (4), lesquelles sont séparées l'une de l'autre par un piston (5), et comportant un organe d'actionnement (6) lequel est relié mécaniquement au piston (5) et est apte et destiné à être relié mécaniquement audit au moins un élément de machine, ledit piston (5) étant mobile entre successivement une position initiale (P1) à mémoriser pour laquelle la première chambre (3) ou la deuxième chambre (4) est apte et destinée à contenir un volume d'huile à mémoriser (V1), une position intermédiaire (P2) pour laquelle la première chambre (3) est apte et destinée à contenir un volume d'huile quelconque (V2) et différent du volume d'huile à mémoriser (V1) et une position finale (P3) pour laquelle la première chambre (3) est apte et destinée à contenir un volume d'huile mémorisé (V3) égal ou sensiblement égal audit volume d'huile à mémoriser (V1),
• une unité de pilotage/distribution principale (7) reliée hydrauliquement au moins à l'une des première et deuxième chambres (3, 4) dudit vérin hydraulique principal (1) par des moyens de conduction hydraulique et étant agencée pour actionner ledit vérin hydraulique principal (1) au moins entre la position initiale (P1) à mémoriser et la position intermédiaire (P2),
- un circuit hydraulique mémoire relié hydrauliquement audit circuit hydraulique principal comprenant au moins :
• un cylindre de stockage (8) hydraulique comprenant au moins une première chambre de stockage (9) et une deuxième chambre de stockage (10), lesquelles sont séparées l'une de l'autre par un piston (11) mobile,
• une unité de pilotage/distribution mémoire (12) reliée hydrauliquement, à la deuxième chambre de stockage (10) dudit cylindre de stockage (8) hydraulique par des moyens de conduction hydraulique (13),
ledit cylindre de stockage (8) hydraulique étant une entité distincte du cylindre (2) dudit vérin hydraulique principal (1),
la machine agricole est **caractérisée en ce que** :
la première chambre de stockage (9) dudit cylindre de stockage (8) hydraulique est reliée hydrauliquement indirectement à ladite première chambre (3) dudit vérin hydraulique principal (1) par des moyens de conduction hydraulique (14, 14a, 14b) comprenant des conduites hydrauliques (14a, 14b) et par l'unité de pilotage/distribution mémoire (12) de sorte que ledit volume d'huile à mémoriser (V1) contenu dans la première chambre (3) ou la deuxième chambre (4) correspondant à la position initiale (P1) du piston (5) soit transféré dans la première chambre de stockage (9) dudit cylindre de stockage (8) hydraulique pour mémoriser la position initiale (P1) lors du déplacement dudit piston (5) de la position initiale (P1) vers la position intermédiaire (P2) dudit piston (5).

2. Machine agricole selon la revendication 1, **caractérisée en ce que** ladite première chambre de stockage (9) dudit cylindre de stockage (8) est reliée hydrauliquement indirectement à ladite première chambre (3) dudit vérin hydraulique principal (1) au moins par lesdits moyens de conduction hydraulique (14, 14a, 14b) comprenant les conduites hydrauliques (14a, 14b) et par l'unité de pilotage/distribution mémoire (12), de sorte que ledit volume d'huile à mémoriser (V1) contenu dans la première chambre de stockage (9) dudit cylindre de stockage (8) soit transféré dans la première chambre (3) ou la deuxième chambre (4) dudit vérin hydraulique principal (1) pour actionner le piston (5) du vérin hydraulique principal (1) de la position intermédiaire (P2) vers la position finale (P3) du piston (5) dudit vérin hydraulique principal (1) correspondant à ladite position initiale (P1).

3. Machine agricole selon l'une quelconque des revendications 1 à 2, **caractérisée en ce que** l'unité de pilotage principale (7) est agencée pour actionner le piston (5) du vérin hydraulique principal (1) de la position initiale (P1) à mémoriser vers la position intermédiaire (P2) dudit piston (5), de sorte que ledit volume d'huile à mémoriser (V1) contenu dans la première chambre (3) ou la deuxième chambre (4) soit transféré dans la première chambre de stockage (9) dudit cylindre de stockage (8) pour mémoriser la position initiale (P1) lors du déplacement dudit piston (5) de la position initiale (P1) vers la position intermédiaire (P2) dudit piston (5).

4. Machine agricole selon l'une quelconque des revendications 2 à 3, **caractérisée en ce que** l'unité de pilotage/distribution mémoire (12) est agencée pour actionner le piston (11) du cylindre de stockage (8), de sorte que ledit volume d'huile à mémoriser (V1) contenu dans la première chambre de stockage (9) dudit cylindre de stockage (8) soit transféré dans la première chambre (3) dudit vérin hydraulique principal (1), pour déplacer le piston (5) du vérin hydraulique principal (1) de la position intermédiaire (P2) vers la position finale (P3) du piston (5) dudit vérin hydraulique principal (1).

5. Machine agricole selon l'une quelconque des revendications 1 à 4, **caractérisée en ce que** le circuit hydraulique principal comprend une pluralité de vérins hydrauliques ainsi qu'un diviseur de débit permettant d'alimenter la pluralité de vérins hydrauliques.

6. Machine agricole selon l'une quelconque des revendications 1 à 5, **caractérisée en ce que** ladite unité de pilotage/distribution mémoire (12) est choisie parmi un distributeur hydraulique, une électrovanne, un clapet anti-retour double piloté ou un robinet à actionnement manuel.

7. Machine agricole selon l'une quelconque des revendications 1 à 6, **caractérisée en ce que** le piston (11) du cylindre de stockage (8) est relié à un organe de mesure de la position du piston (11) au sein du cylindre de stockage (8).

8. Machine agricole selon l'une quelconque des revendications 1 à 7, **caractérisée en ce que** la machine agricole est choisie parmi une machine agricole de travail au sol ou une machine repliable.

9. Machine agricole selon l'une quelconque des revendications 1 à 8, **caractérisée en ce que** la machine agricole est une herse, de préférence une herse rotative repliable.

## Patentansprüche

1. Landwirtschaftliche Maschine mit mindestens einem
Maschinenelement, das geeignet und bestimmt ist, durch mindestens einen hydraulischen Hauptzylinder (1) und einen Hydraulikkreislauf betätigt zu werden,
wobei der besagte Hydraulikkreislauf mindestens Folgendes umfasst:
- einen Haupthydraulikkreislauf mit mindestens
• der besagte mindestens eine hydraulische Hauptzylinder (1) mit mindestens einem Zylinder (2), der eine erste Kammer (3) und eine zweite Kammer (4) umfasst, die durch einen Kolben (5) voneinander getrennt sind, und mit einem Betätigungsorgan (6), das mechanisch mit dem Kolben (5) verbunden ist und dazu geeignet und bestimmt ist, mechanisch mit dem besagten mindestens einen Maschinenelement verbunden zu werden, wobei der besagte Kolben (5) beweglich ist zwischen aufeinanderfolgend einer zu speichernden Anfangsposition (P1), für die die erste Kammer (3) oder die zweite Kammer (4) geeignet und dazu bestimmt ist, ein zu speicherndes Ölvolumen (V1) zu enthalten, einer Zwischenposition (P2), für die die erste Kammer (3) geeignet und dazu bestimmt ist, ein beliebiges Ölvolumen (V2) zu enthalten, das von dem zu speichernden Ölvolumen (V1) verschieden ist, und einer Endposition (P3), für die die erste Kammer (3) geeignet und dazu bestimmt ist, ein gespeichertes Ölvolumen (V3) zu enthalten, das gleich oder im Wesentlichen gleich dem zu speichernden Ölvolumen (V1) ist,
• eine Hauptsteuerungs-/-verteilungseinheit (7), die hydraulisch mit mindestens einer der ersten und zweiten Kammern (3, 4) des besagten hydraulischen Hauptzylinders (1) durch hydraulische Leitungsmittel verbunden ist und so angeordnet ist, dass sie den besagten hydraulischen Hauptzylinder (1) mindestens zwischen der zu speichernden Anfangsposition (P1) und der Zwischenposition (P2) betätigt,
- einen hydraulischen Speicherkreislauf, der hydraulisch mit dem besagten Haupthydraulikkreislauf verbunden ist und mindestens Folgendes umfasst:
• einen hydraulischen Speicherzylinder (8) mit mindestens einer ersten Speicherkammer (9) und einer zweiten Speicherkammer (10), die durch einen beweglichen Kolben (11) voneinander getrennt sind,
• eine Speichersteuerungs/-verteilungseinheit (12), die hydraulisch mit der zweiten Speicherkammer (10) des besagten hydraulischen Speicherzylinders (8) durch hydraulische Leitungsmittel (13) verbunden ist,
wobei der besagte hydraulische Speicherzylinder (8) eine getrennte Einheit von dem Zylinder (2) des besagten hydraulischen Hauptzylinders (1) ist,
die landwirtschaftliche Maschine ist **dadurch gekennzeichnet, dass**:
die erste Speicherkammer (9) des besagten hydraulischen Speicherzylinders (8) indirekt hydraulisch mit der besagten ersten Kammer (3) des besagten hydraulischen Hauptzylinders (1) durch hydraulische Leitungsmittel (14, 14a, 14b) mit hydraulischen Leitungen (14a, 14b) und durch die Speichersteuerungs-/-verteilungseinheit (12) verbunden ist, so dass das in der ersten Kammer (3) oder der zweiten Kammer (4) enthaltene zu speichernde Ölvolumen (V1), das der Anfangsposition (P1) des Kolbens (5) entspricht, in die erste Speicherkammer (9) des besagten hydraulischen Speicherzylinders (8) überführt wird, um die Anfangsposition (P1) bei der Bewegung des besagten Kolbens (5) aus der Anfangsposition (P1) in die Zwischenposition (P2) des besagten Kolbens (5) zu speichern.

2. Landwirtschaftliche Maschine nach Anspruch 1, **dadurch gekennzeichnet, dass** die besagte erste Speicherkammer (9) des besagten Speicherzylinders (8) hydraulisch indirekt mit der besagten ersten Kammer (3) des besagten hydraulischen Hauptzylinders (1) verbunden ist, zumindest durch die besagten hydraulischen Leitungsmittel (14, 14a, 14b), die die hydraulischen Leitungen (14a, 14b) umfassen, und durch die Speichersteuerungs-/- verteilungseinheit (12), so dass das zu speichernde Ölvolumen (V1), das in der ersten Speicherkammer (9) des besagten Speicherzylinders (8) enthalten ist, in die erste Kammer (3) oder die zweite Kammer (4) des besagten hydraulischen Hauptzylinders (1) überführt wird, um den Kolben (5) des hydraulischen Hauptzylinders (1) aus der Zwischenposition (P2) in die Endposition (P3) des Kolbens (5) des besagten hydraulischen Hauptzylinders (1), die der besagten Anfangsposition (P1) entspricht, zu betätigen.

3. Landwirtschaftliche Maschine nach einem der Ansprüche 1 bis 2, **dadurch gekennzeichnet, dass** die Hauptsteuerungseinheit (7) so angeordnet ist, dass sie den Kolben (5) des Haupthydraulikzylinders (1) von der zu speichernden Anfangsposition (P1) in die Zwischenposition (P2) des besagten Kolbens (5) betätigt, so dass das besagte zu speichernde Ölvolumen (V1), das in der ersten Kammer (3) oder der zweiten Kammer (4) enthalten ist, in die erste Speicherkammer (9) des besagten Speicherzylinders (8) überführt wird, um die Ausgangsposition (P1) zu speichern, wenn der besagte Kolben (5) aus der Ausgangsposition (P1) in die Zwischenposition (P2) des besagten Kolbens (5) bewegt wird.

4. Landwirtschaftliche Maschine nach einem der Ansprüche 2 bis 3, **dadurch gekennzeichnet, dass** die Speichersteuerungs-/-verteilungseinheit (12) so angeordnet ist, dass sie den Kolben (11) des Speicherzylinders (8) betätigt, so dass das besagte zu speichernde Ölvolumen (V1), das in der ersten Speicherkammer (9) des besagten Speicherzylinders (8) enthalten ist, in die erste Kammer (3) des besagten Haupthydraulikzylinders (1) überführt wird, um den Kolben (5) des Haupthydraulikzylinders (1) aus der Zwischenposition (P2) in die Endposition (P3) des Kolbens (5) des besagten Haupthydraulikzylinders (1) zu bewegen.

5. Landwirtschaftliche Maschine nach einem der Ansprüche 1 bis 4, **dadurch gekennzeichnet, dass** der Haupthydraulikkreislauf eine Vielzahl von Hydraulikzylindern sowie einen Mengenteiler zur Versorgung der Vielzahl von Hydraulikzylindern umfasst.

6. Landwirtschaftliche Maschine nach einem der Ansprüche 1 bis 5, **dadurch gekennzeichnet, dass** die besagte Speichersteuerungs-/- verteilungseinheit (12) aus einem hydraulischen Verteiler, einem Magnetventil, einem vorgesteuerten Doppelrückschlagventil oder einem manuell betätigten Hahn ausgewählt ist.

7. Landwirtschaftliche Maschine nach einem der Ansprüche 1 bis 6, **dadurch gekennzeichnet, dass** der Kolben (11) des Speicherzylinders (8) mit einem Messorgan für die Position des Kolbens (11) innerhalb des Speicherzylinders (8) verbunden ist.

8. Landwirtschaftliche Maschine nach einem der Ansprüche 1 bis 7, **dadurch gekennzeichnet, dass** die landwirtschaftliche Maschine aus einer landwirtschaftlichen Bodenbearbeitungsmaschine oder einer zusammenklappbaren Maschine ausgewählt ist.

9. Landmaschine nach einem der Ansprüche 1 bis 8, **dadurch gekennzeichnet, dass** die Landmaschine eine Egge, vorzugsweise eine klappbare Kreiselegge, ist.

## Claims

1. Agricultural machine comprising at least one machine element adapted
and intended to be actuated by at least one main hydraulic cylinder (1) and a hydraulic circuit,
said hydraulic circuit comprising at least:
- a main hydraulic circuit comprising at least
• said at least one main hydraulic cylinder (1) comprising at least one cylinder (2) comprising a first chamber (3) and a second chamber (4), which are separated from each other by a piston (5), and comprising an actuating member (6) which is mechanically connected to the piston (5) and is adapted and intended to be mechanically connected to said at least one machine element, said piston (5) being movable successively between an initial position (P1) to be memorised for which the first chamber (3) or the second chamber (4) is adapted and intended to contain a volume of oil to be memorised (V1), an intermediate position (P2) for which the first chamber (3) is adapted and intended to contain any volume of oil (V2) different from the volume of oil to be memorised (V1) and a final position (P3) for which the first chamber (3) is adapted and intended to contain a memorised volume of oil (V3) equal or substantially equal to said volume of oil to be memorised (V1),
• a main control/distribution unit (7) hydraulically connected to at least one of the first and second chambers (3, 4) of said main hydraulic cylinder (1) by hydraulic conduction means and being arranged to actuate said main hydraulic cylinder (1) at least between the initial position (P1) to be memorised and the intermediate position (P2),
- a memory hydraulic circuit hydraulically connected to said main hydraulic circuit comprising at least:
• a hydraulic storage cylinder (8) comprising at least a first storage chamber (9) and a second storage chamber (10), which are separated from each other by a mobile piston (11),
• a memory control/distribution unit (12) hydraulically connected to the second storage chamber (10) of said hydraulic storage cylinder (8) by hydraulic conduction means (13),
said hydraulic storage cylinder (8) being a separate entity from the cylinder (2) of said main hydraulic cylinder (1),
the agricultural machine is **characterised in that**:
the first storage chamber (9) of said hydraulic storage cylinder (8) is hydraulically connected indirectly to said first chamber (3) of said main hydraulic cylinder (1) by hydraulic conduction means (14, 14a, 14b) comprising hydraulic pipes (14a, 14b) and by the memory control/distribution unit (12) so that said volume of oil to be memorised (V1) contained in the first chamber (3) or the second chamber (4) corresponding to the initial position (P1) of the piston (5) is transferred into the first storage chamber (9) of said hydraulic storage cylinder (8) in order to memorise the initial position (P1) during the displacement of said piston (5) from the initial position (P1) to the intermediate position (P2) of said piston (5).

2. Agricultural machine according to claim 1, **characterized in that** said first storage chamber (9) of said storage cylinder (8) is hydraulically connected indirectly to said first chamber (3) of said main hydraulic cylinder (1) at least by said hydraulic conduction means (14, 14a, 14b) comprising the hydraulic pipes (14a, 14b) and by the memory control/distribution unit (12), so that said volume of oil to be memorized (V1) contained in the first storage chamber (9) of said storage cylinder (8) is transferred into the first chamber (3) or the second chamber (4) of said main hydraulic cylinder (1) to actuate the piston (5) of the main hydraulic cylinder (1) from the intermediate position (P2) to the final position (P3) of the piston (5) of said main hydraulic cylinder (1) corresponding to said initial position (P1).

3. Agricultural machine according to any one of claims 1 to 2, **characterized in that** the main control unit (7) is arranged to actuate the piston (5) of the main hydraulic cylinder (1) from the initial position (P1) to be memorized to the intermediate position (P2) of said piston (5), so that said volume of oil to be memorized (V1) contained in the first chamber (3) or the second chamber (4) is transferred into the first storage chamber (9) of said storage cylinder (8) to memorize the initial position (P1) upon displacement of said piston (5) from the initial position (P1) to the intermediate position (P2) of said piston (5).

4. Agricultural machine according to any one of claims 2 to 3, **characterized in that** the memory control/distribution unit (12) is arranged to actuate the piston (11) of the storage cylinder (8), so that said volume of oil to be memorised (V1) contained in the first storage chamber (9) of said storage cylinder (8) is transferred to the first chamber (3) of said main hydraulic cylinder (1), to move the piston (5) of the main hydraulic cylinder (1) from the intermediate position (P2) to the final position (P3) of the piston (5) of said main hydraulic cylinder (1).

5. Agricultural machine according to any one of claims 1 to 4, **characterized in that** the main hydraulic circuit comprises a plurality of hydraulic cylinders and a flow divider for supplying the plurality of hydraulic cylinders.

6. Agricultural machine according to any one of claims 1 to 5, **characterized in that** said memory control/distribution unit (12) is selected from a hydraulic distributor, a solenoid valve, a double piloted non-return valve or a manually actuated valve.

7. Agricultural machine according to any one of claims 1 to 6, **characterized in that** the piston (11) of the storage cylinder (8) is connected to a device for measuring the position of the piston (11) within the storage cylinder (8).

8. Agricultural machine according to any one of claims 1 to 7, **characterized in that** the agricultural machine is selected from a soil working agricultural machine or a foldable machine.

9. Agricultural machine according to any one of claims 1 to 8, **characterized in that** the agricultural machine is a harrow, preferably a folding rotary harrow.
